# EUROPEAN PATENT SPECIFICATION

(11) **EP 4 623 250 B1**
(45) Date of publication and mention of the grant of the patent: **18.02.2026**
(21) Application number: 24726997.0
(22) Date of filing: 15.05.2024
(51) Int. Cl.: F23N 5/10, F23N 5/14

(54) **METHOD FOR DETECTING THE PRESENCE OF FLAME IN A PREMIXED HYDROGEN BURNER**
VERFAHREN ZUR ERKENNUNG DER ANWESENHEIT EINER FLAMME IN EINEM VORMISCHWASSERSTOFFBRENNER
PROCÉDÉ DE DÉTECTION DE LA PRÉSENCE D'UNE FLAMME DANS UN BRÛLEUR À HYDROGÈNE PRÉMÉLANGÉ

(30) Priority: 31.05.2023 IT 202300011010
(43) Date of publication of application: 01.10.2025
(73) Proprietor: ARISTON S.P.A., 60044 Fabriano (AN) (IT)
(72) Inventor: CHIAVETTI, Flavio, 60044 Fabriano (IT); FIORETTI, Andrea, 62019 Recanati (IT)
(74) Representative: Mar.Bre S.r.l.
(86) International application number: PCT/IB2024/054697
(87) International publication number: WO 2024/246652

(56) References cited:
- EP-A1- 3 933 267
- DE-A1- 102021 102 740
- DE-A1- 19 903 305
- US-A- 4 984 736

## Description

A method for controlling the presence of a flame in a premixed gas burner, in particular a premixed gas burner with modulable power and modulable excess air λ is described below.

A premixed gas burner is also described, in particular a premixed gas burner with modulable power and modulable excess air λ, equipped with a device for controlling the presence of a flame.

The control method described hereinafter is suitable for verifying the presence of the flame in a premixed gas burner both during the ignition step and during the steady operating step.

The control method is particularly suitable for the premixed burners fed by pure hydrogen or by a high hydrogen content fuel gas (e.g. having a hydrogen volume content equal to or greater than 98%).

The shortly described method and the burner are used, in particular in the condensing boilers fed by hydrogen H2 and intended for the production of hot water for civil uses.

It is known to resort to the premixing of the fuel gas with combustion air in order to contain the emissions of nitrogen oxides (NOₓ), and to supply a quantity of air greater than the stoichiometric air, i.e. to work with excess air λ.

It is also known to vary the excess air λ according to the working power of the burner, so as to have a more stable flame (reducing the risk of flashback at low power or flame detachment at high power).

It is also known to increase the excess air λ during the ignition step, so as to reduce the risk of flashbacks as well as the risk of detonations due to a delayed ignition. The combustion of hydrogen has some peculiarities, compared to the combustion of gaseous hydrocarbons, which should be taken into account both in the design and in the management of the operation of the burner.

For example, in the combustion of the hydrogen there is a greater risk of flashback than that encountered in the combustion of the traditional gaseous hydrocarbons (such as for example methane, butane, ethane and propane).

Such risk of flashback, which is more likely when the burner is ignited or at low thermal power, may be avoided, for example, by increasing the excess air λ.

Furthermore, the flame of hydrogen is not an ionising flame, if not at the highest power levels: in the case of combustion of hydrogen it is therefore not possible to monitor the presence of the flame by resorting to a conventional ionisation sensor (as it usually happens with the traditional methane or other light hydrocarbon burners) but other solutions must be resorted to monitor the presence of the flame. Furthermore, air and hydrogen mixtures are particularly explosive; accumulations of the mixture in the combustion chamber should therefore be avoided in absence of combustion (accumulations which may occur, especially, in the transients characterising the burner ignition step and during the steps of accidental extinguishment thereof).

Consequently, when a premixed burner is fed by hydrogen, particular attention should be paid to minimise both the ignition times of the flame and the times between an accidental extinguishment of the flame and the restart or stop of the burner.

It is clear that the flame detection system should have sufficiently short response times in order to minimise these transients.

Some solutions are known to monitor the presence of the flame during the combustion of hydrogen in the premixed burners.

A known technique provides for monitoring the presence of the flame due to the combustion of hydrogen by means of optical devices that monitor the emission of ultraviolet rays, for example in the frequency range corresponding to the presence of hydroxyl radicals OH.

The ultraviolet sensors have a very low time constant but have low sensitivity problems when the burner works at low power or when it works with high air/gas ratios (a situation that occurs both during the ignition step and during the low power operating step).

In other words, the ultraviolet sensors are poorly reliable when the intensity of emission of the ultraviolet rays of the flame is low.

It is therefore complicated to correctly manage the burner when it works at low power or in any case when it works with high values of air/gas ratio, as it may happen for example when working at low power or during the ignition step of the burner.

Furthermore, the use of optical sensors also entails further problems: for example, particular glasses are required to obtain an optical connection with the combustion chamber, which lend themselves to the risk of fogging during the transient operating regimes of the burner, with consequent erroneous readings by the sensors.

A second known technique provides for monitoring the presence of the flame due to the combustion of hydrogen by means of temperature sensors that measure the temperature inside the combustion chamber.

Such prior art provides for comparing the detected temperature to a lower consensus threshold, to discriminate the extinguishment occurred, and a higher consensus threshold, to discriminate the ignition occurred.

However, the currently known temperature sensors have excessively long response times to detect the ignition or extinguishment occurred, so that there is a high risk of excessive concentrations of the air/hydrogen mixture to be created inside the combustion chamber, with the consequent risk of detonations.

The patent application EP3933267 is an example of the prior art just mentioned and describes a method for controlling the presence of the flame in a hydrogen-fed premixed burner, both during the flame ignition step and steady operation, wherein the measured temperature values are compared to expected values, i.e. to previously stored reference values.

The comparison between the measured values with the expected values allows understanding whether the ignition took place correctly and if the flame is present. The solution described by EP3933267 is however unreliable for the reasons mentioned above.

In fact, measuring the temperature when the burner is ignited takes too long to detect the presence of the flame; equally, in case of accidental extinguishment of the burner, reaching the reference value representing the absence of flame is detected after an excessively long time, incompatible with the risk of an excessive accumulation of the air/hydrogen mixture inside the combustion chamber. Another solution, similar to that described in EP3933267, is described in the application DE19903305, which however concerns a device and related method for controlling the start of the combustion in a vehicle engine.

A further prior art is proposed by the patent application DE102021102740, concerning a method for monitoring the presence of the flame in a premixed burner, the body whereof is made of two different metallic materials that form a thermocouple.

By monitoring the thermoelectric voltage produced by the thermocouple and the comparison thereof with a reference value, DE102021102740 is able to discriminate whether the flame ignited or not.

The prior art DE102021102740 therefore overcomes some problems of the prior art, in view, however, of the need of having to make the burner body with two different metallic materials; furthermore, the use of the voltage signal produced by the thermocouple may result in reading errors, in case of external disturbances of electromagnetic nature.

An object of the inventors is to solve, at least in part, the problems of the prior art and, in particular, the problems described above.

In particular, an object of the inventors is to propose a reliable solution for monitoring the presence of the flame in a premixed gas burner, in particular in a premixed gas burner with modulable power and modulable excess air λ, fed by hydrogen.

A further object of the inventors is to propose a solution for monitoring the flame of a premixed burner that burns hydrogen, particularly in low thermal power conditions of and/or with high values of the air/fuel gas ratio.

Some possible embodiments of a flame control method and of the related device using such method are hereinafter described with reference to the attached drawing tables in which:
- Figure 1 is a schematic view of a control and regulation device of a hydrogen-fed premixed burner;
- Figure 2.A is a qualitative diagram showing the trend of the temperature, in the space in which the flame of the burner develops, during the ignition step of the burner;

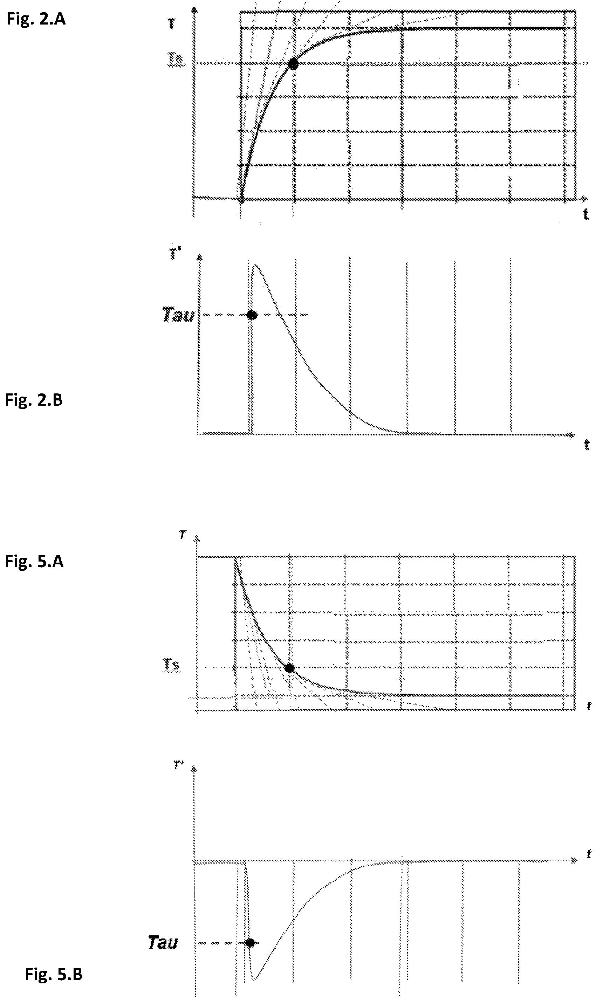

- Figure 2.B is a qualitative diagram showing the trend of the temperature derivative compared to the time, in the space in which the flame of the burner develops, during the ignition step of the burner;

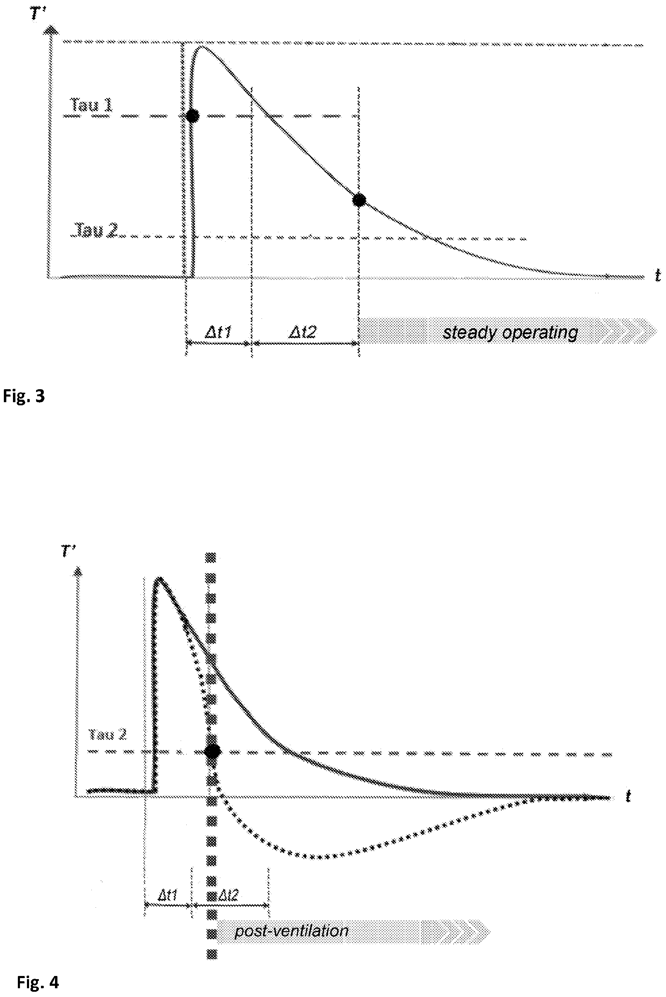

- Figure 3 is a detailed diagram of what shown in Figure 2.B, depicting the trend of the temperature derivative compared to the time, in case of correct ignition of the flame of the burner;
- Figure 4 is a qualitative diagram showing the trend of the temperature derivative compared to the time, in the space in which the flame of the burner develops, in case of a false signal or of a subsequent extinguishment of the flame during the ignition step of the burner;
- Figure 5.A is a qualitative diagram showing the trend of the temperature, in the space in which the flame of the burner develops, in case of extinguishment of the flame during the steady operating step of the burner;
- Figure 5.B is a qualitative diagram showing the trend of the temperature derivative compared to the time, in the space in which the flame of the burner develops, in case of extinguishment of the flame during the steady operating step of the burner;

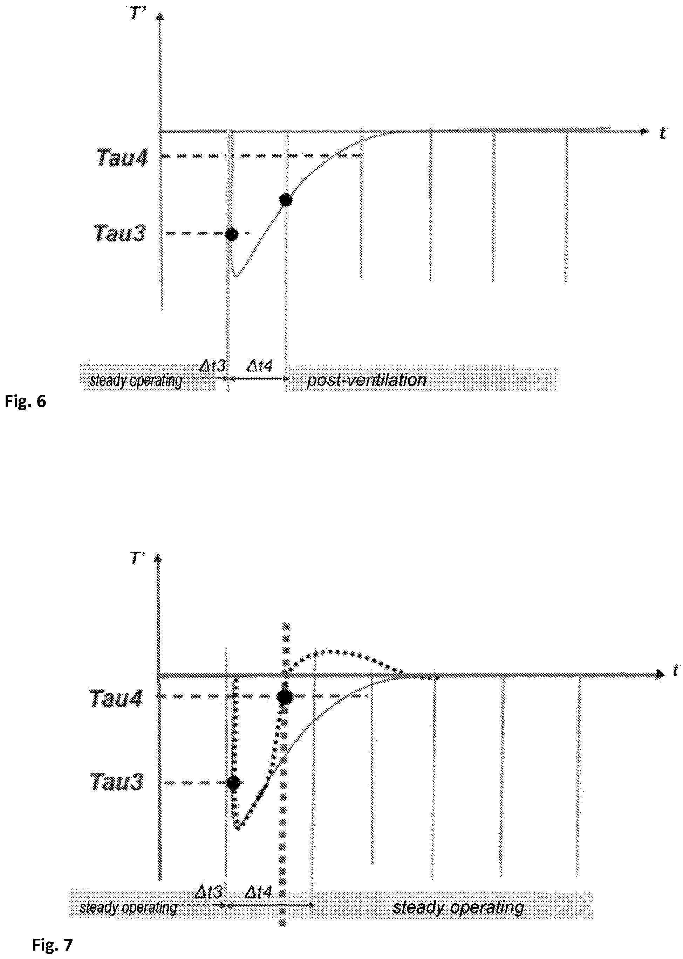

- Figure 6 is a qualitative diagram showing the trend of the temperature derivative compared to the time, in the space in which the flame of the burner develops, in case of actual extinguishment of the flame during the steady operating step of the burner;
- Figure 7 is a qualitative diagram showing the trend of the temperature derivative compared to the time, in the space in which the flame of the burner develops, in case of a false extinguishment signal of the flame during steady operating step of the burner;

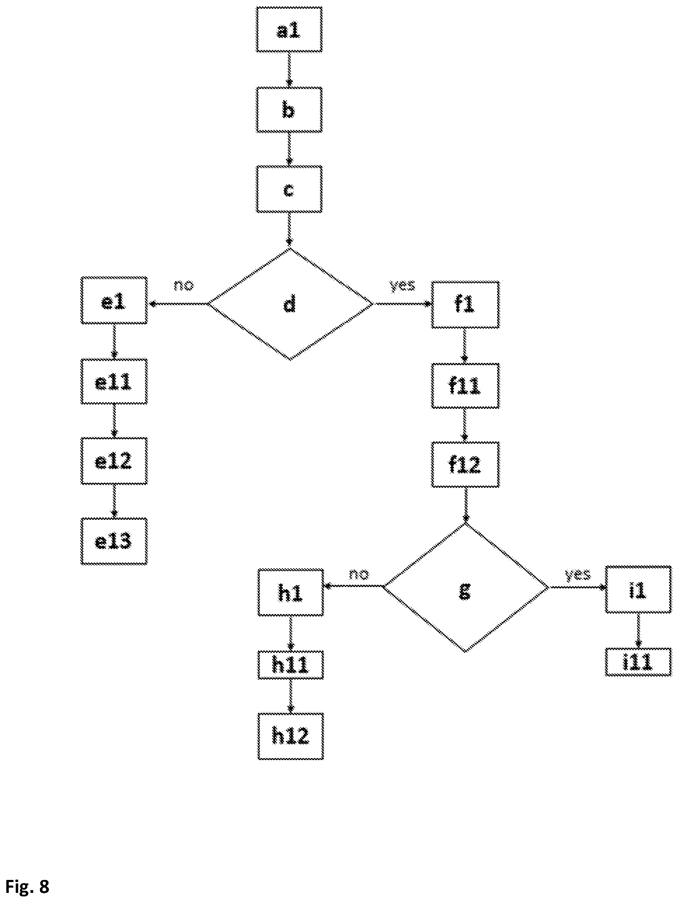

- Figure 8 schematically shows a block diagram which summarises the steps of the method for controlling the presence of the flame during the ignition step of the burner, in accordance with what is shown in the Figures 3 and 4;

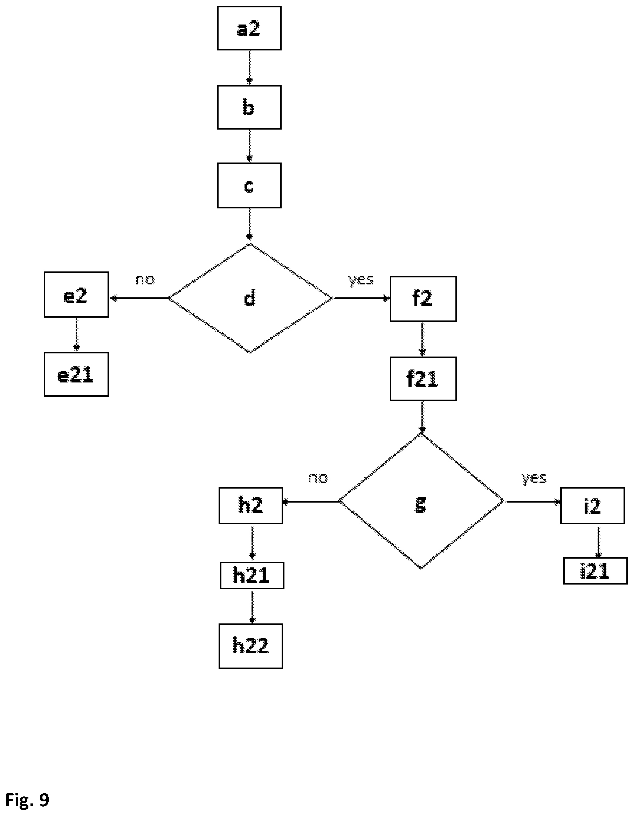

- Figure 9 schematically shows a block diagram which summarises the steps of the method for controlling the presence of the flame during the steady operating step of the burner, in accordance with what is shown in the Figures 6 and 7.

In all the qualitative diagrams listed above, the derivative T' of the temperature T (or the temperature T where otherwise indicated) is placed on the axis of ordinates, while the time t on the axis of abscissas.

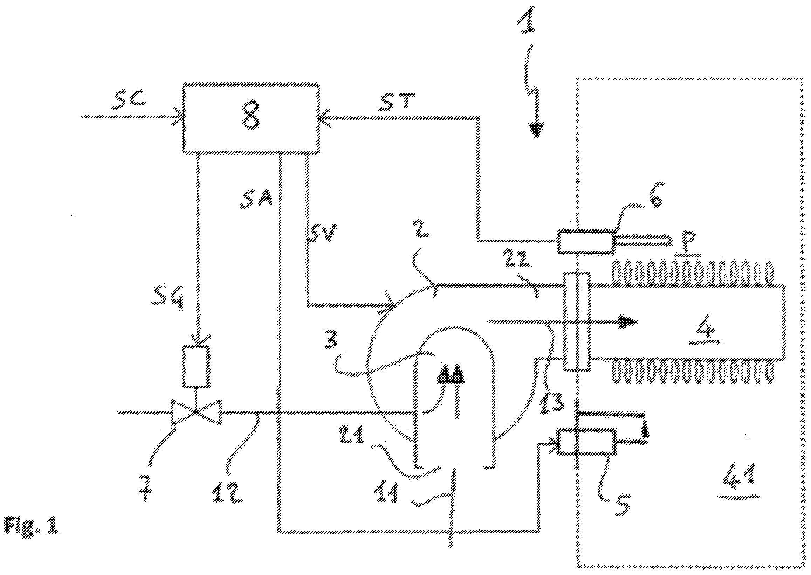

With reference to Figure 1, number 1 indicates a premixed gas burner comprising a combustion control and regulation device 8.

The burner 1 comprises a first duct 11 (or combustion air flow duct), a second duct 12 (or gaseous fuel flow duct, specifically composed, mainly and/or essentially of hydrogen H2), a variable speed fan 2, having a suction 21 connected to the first duct 11 and a delivery 22.

The speed of the fan 2 may vary according to the required thermal power and desired excess air λ.

The mixing of the air coming from the first duct 11 with the fuel gas coming from the second duct 12 may take place by means of a Venturi tube 3 which may be positioned, for example, upstream of the fan 2.

The second duct 12 is in communication with the narrow section of the Venturi tube 3, so that the fuel gas is sucked.

A motorised valve 7 is provided to regulate the flow rate of the fuel gas passing through the second duct 12.

A first duct 13, or outflow duct of air and gaseous fuel mixture is provided, located downstream of the Venturi tube 3 which feeds a burner body 4.

The burner body 4 may be a conventional burner body of the perforated surface type and is inserted inside a combustion chamber 41.

An ignition device 5 is provided to ignite the air and gaseous fuel mixture that escapes from the Venturi tube 3 and reaches the burner body 4.

The flame ignition device 5 may be of the electric discharge type.

Inside the combustion chamber 41 there is at least one temperature sensor 6, adapted to detect the presence of the flame.

For simplicity of description, hereinafter, reference shall be made to a variant of the invention which provides for the presence of a single temperature sensor 6, without prejudice to the possibility of a second temperature sensor, possibly to be used as a redundant sensor to ascertain the correct operation of the first temperature sensor.

In the illustrated embodiment, the temperature sensor 6 is not in contact with the burner body 4, but is positioned so as to be able to be hit by the flames that escape from the openings of the burner body 4.

The temperature sensor 6 must be able to withstand the temperatures developing inside the combustion chamber 41.

In this regard, it should be noted that, in the case of combustion of hydrogen, the temperature of the flame may vary from approximately 800 °C to approximately 1,200 °C, depending on the value of the excess air λ and on the operating power of the burner 1.

In a possible embodiment, the temperature sensor 6 may be of the thermocouple type.

In another embodiment, the temperature sensor 6 may be a thermistor, in particular a positive temperature coefficient thermistor (so-called PTC).

In the described embodiments, the temperature sensor 6 comprises an outer coating of ceramic material (for example SiC or Si₃N₄) to protect the sensor from the strongly oxidising atmosphere that is created inside the combustion chamber 41 during the combustion process.

The electronic control and regulation device 8 receives an input signal ST from the temperature sensor 6 and a control signal SC (coming, for example, from a user interface not shown in the figure) indicative of the desired thermal power. The device 8 then provides an ignition output signal SA to the ignition device 5, a signal SV for regulating the speed of the fan 2 and a signal SG for regulating the opening of the motorised valve 7.

According to the invention, the device 8 is able to use the signal ST received from the temperature sensor 6 to check whether there is a flame inside the combustion chamber 41.

In particular, the device 8 is able to verify whether the ignition step of the burner 1 takes place regularly and whether there is any accidental flame extinguishment during the steady operating step.

For such purpose, as clarified below, the device 8 uses the signal ST received from the temperature sensor 6 to calculate the derivative of the temperature over time and to compare it to suitable feedback thresholds in order to ascertain the occurred ignition, the failed ignition. or the extinguishment of the flame.

For the purposes of the present description the term "derivative" is intended as the absolute value of the instantaneous variation of the temperature T of the flame over time and also includes the discrete derivatives obtained by sampling the temperature signal T with a sufficiently small sampling step, for example every 0.1 seconds.

Figure 3 shows the method according to the invention, during the ignition step of the burner 1.

The ignition step begins with the introduction of an air flow and fuel gas into the burner body 4 and the generation of an electric discharge, inside the combustion chamber 41, for a first time interval Δt1.

For such purpose, the fan 2 must come into operation and the motorised valve 7 must open, so as to guarantee the flow of the air and gas mixture into the burner body 4 and its outflow through the openings on the surface of the burner.

During this first time interval Δt1 the sensor 6 detects the temperature T in a point P of the combustion chamber 41, located in the proximity of the external surface of the burner body 4.

The electronic device 8 receives the temperature values detected by the sensor 6 and calculates the derivative T' of the temperature T over time at point P of the combustion chamber 41 in this first time interval Δt1.

If in such first time interval Δt1 the derivative T' never exceeds a first threshold value Tau1, it may be reasonably assumed that the ignition of the flame did not take place or that in any case it did not take place regularly.

In such case, at the end of the first time interval Δt1 the device 8 provides for interrupting the ignition cycle, by driving the stop to the ignition device 5 and the closure of the motorised valve 7, to avoid undesired accumulations of fuel gas inside the combustion chamber 41.

Preferably the fan 2 remains in operation still for some time, to allow a complete washing of the combustion chamber 41, so as to remove any accumulations of hydrogen therein: such prolonged operation of the fan 2 maybe defined as post-ventilation step, a term which will be used hereinafter in the description.

This allows avoiding any detonation phenomena at the next ignition attempt of the burner 1.

On the contrary, if the derivative T' of the temperature T at point P in the first time interval Δt1 exceeds the first pre-set threshold value Tau1, then the flame may be considered to have been triggered and the air and fuel gas flow may be maintained for the next step of the flame stabilisation cycle.

In such case the device 8 provides for driving the stop to the ignition device 5, immediately stopping the generation of the electrical discharge: it should be noted that the first time interval Δt1 is very short just to avoid an excessive accumulation of the air and hydrogen mixture in the combustion chamber 41 and therefore the risk of noisy and dangerous detonations for the integrity of the burner 1 in case of a possible delayed ignition of the flame, i.e. ignition at the very last moment. However, it is not possible to exclude that reaching the first pre-set threshold value Tau1 is not a false positive, deriving for example from temporary external disturbances of electromagnetic nature.

Furthermore, it is not possible to exclude that the flame, for any reason, despite having ignited during this first time interval Δt1, is unstable.

To be sure that the flame was really triggered and remained ignited, the method proposed by the inventors provides for continuing the calculation of the derivative T' of the temperature T in a second time interval Δt2 (following Δt1), where Δt2 > Δt1.

If in this second time interval Δt2, the derivative T' always remains above a second pre-set threshold value Tau2 (where Tau2 < Tau 1 in absolute value), there is the confirmation that the flame remained ignited (see again Figure 3).

It may be deduced that the ignition step of the burner 1 concluded successfully and the flame is stable: it is therefore possible to continue to feed the burner body 4 with the air and fuel gas mixture for the transition to the steady operating step of the burner 1.

Otherwise, i.e. in the event that in this second time interval Δt2 the derivative T' dropped below the second threshold value Tau2, then the device 8 provides for closing the motorised valve 7 and keeping the fan 2 switched on for some more time, so as to carry out a complete washing of the combustion chamber 41 through the post-ventilation step.

This condition of flame extinguishment during the ignition cycle of the burner 1 is shown in Figure 4, which shows an instantaneous decrease in the derivative T' of the temperature T within the second time interval Δt2, which drops below such threshold Tau2.

In the case of combustion of hydrogen, or of a fuel gas having a high hydrogen content, the first threshold Tau1 may be approximately comprised between 20 °C/sec and 70 °C/sec, while the second threshold Tau2 may be approximately comprised between 5 °C/sec and 30 °C/sec, it being understood that typically Tau2 < Tau 1 in absolute value.

Both of such thresholds Tau1 and Tau2 are values pre-set and stored in the device 8, experimentally defined in laboratory or with similar empirical methods.

In the case of combustion of hydrogen, or of a fuel gas having a high hydrogen content, the first time interval Δt1 is convenient for it to be less than or equal to approximately 2 seconds, while the second time interval Δt2 is typically less than or equal to about 4 seconds.

As anticipated, the burner 1 described above is also able to monitor the presence of the flame after the ignition step, so as to verify any accidental extinguishment phenomena during the steady operating step.

For such purpose, the temperature T at point P of said combustion chamber 41 is monitored and the derivative of the temperature T over time T' is continuously calculated in a first time interval Δt3.

Since during the steady operating step of a hydrogen burner the temperature T of the flame is indicatively comprised between 800 °C and 1,200 °C, in the event of an accidental extinguishment thereof, the derivative T' of such temperature T takes an instantaneous decreasing trend, which may be immediately verified by comparing the value thereof to a pre-set feedback threshold Tau3.

If in this first time interval Δt3 (which is of very short duration, preferably equal to the smallest sampling step, for example 0.1 seconds, precisely because the monitoring of the derivative over time occurs continuously) the derivative T' of the temperature T does not drop below a first pre-set threshold value Tau3, it may be assumed that the flame is ignited and the steady operation of the burner 1 may continue correctly.

On the contrary, if in such first time interval Δt3 the derivative T' of the temperature T drops below said first pre-set threshold value Tau3, it may be reasonably assumed that the accidental extinguishment of the flame has actually occurred.

To confirm that the flame actually extinguished and that the reaching of the first threshold value Tau3 by the derivative T' of the temperature T is not a false positive caused for example by temporary external disturbances of electromagnetic nature, the proposed method provides for continuing the calculation of the derivative T' of the temperature T in a second time interval Δt4 (subsequent and immediately contiguous to Δt3), where Δt4 > Δt3.

During this second time interval Δt4 the air and fuel gas flow is kept operational. If in this second time interval Δt4, the derivative T' continues to keep always below the aforementioned second pre-set threshold value Tau4 (where Tau4 < Tau 3 in absolute value), then there is the confirmation that the flame actually extinguished.

At this point the device 8 provides for interrupting the fuel gas flow by acting on the motorised valve 7 and carries out the post-ventilation step to wash the combustion chamber 41, so as to prepare the burner for a new ignition step.

This condition of flame extinguishment during the operating cycle of the burner 1 is represented in Figure 6, in which a sudden decrease in the derivative T' of the temperature T beyond the threshold Tau3 and the subsequent failure to reach the second threshold value Tau4 in the second time interval Δt4 is shown, proving that the flame has actually gone off.

On the contrary, if in the second time interval Δt4 the flame is actually still ignited (the reaching of the threshold Tau3 by the derivative T' during the first time interval Δt3 being configured as a false positive), then the trend of the derivative T' would undergo an instantaneous inversion and would exceed the second pre-set threshold value Tau4: in such case the device 8 keeps feeding the burner body 4 with the air and fuel gas mixture for the normal steady operating step of the said burner 1 to be continued.

This condition of false extinguishment of the flame during the operating cycle of the burner 1 is depicted in Figure 7, in which it is seen that the derivative T' of the temperature T exceeds the threshold Tau4 within the second time interval Δt4, proving that the flame is actually ignited or that it re-ignited during such second time interval Δt4.

Like the thresholds Tau1 and Tau2, even such thresholds Tau3 and Tau4 are values pre-set and stored in the device 8, experimentally defined in laboratory or with similar empirical methods.

In the case of combustion of hydrogen, or of a fuel gas having a high hydrogen content, the first threshold Tau3 may be approximately comprised between 20 °C/sec and 70 °C/sec, while the second threshold Tau4 may be approximately comprised between 5 °C/sec and 30 °C/sec, it being understood that typically Tau4 < Tau 3 in absolute value.

As mentioned above, the first time interval Δt3 is of very short duration, for example 0.1 seconds, as the control of the derivative over time must take place continuously during the steady operating step of the burner 1.

Instead, the second time interval Δt4 is typically less than or equal to approximately 4 seconds, to avoid the risk of noisy detonations and dangerous for the integrity of the burner 1 due to an excessive accumulation of the air and hydrogen mixture in the combustion chamber 41 and to a prolonged generation of the ignition electrical discharge, especially in the event that the flame has actually extinguished in such second time interval Δt4.

The above described flame presence control method is particularly effective in the management of premixed burners that burn hydrogen, obviating the problems of the prior art caused by the use of temperature sensors for monitoring the flame. The qualitative diagrams of Figures 2.A and 2.B compare the trend of the temperature of a burner (Figure 2.A) to the trend of the derivative of the temperature with respect to time (Figure 2.B) during the ignition step of the burner, in relation to respective consensus thresholds Ta and Tau which are representative of the occurred ignition of the flame.

From the comparison it is clear that the main advantage of the control method just described compared to the methods known so far that use temperature sensors for monitoring the flame lies in the ability to more rapidly detect the achievement of the consensus threshold of the occurred ignition of the flame: in fact the definition of a feedback threshold Tau of the derivative T' of the temperature T of the diagram in Figure 2.B allows an almost instantaneous or significantly shorter than necessary verification to reach the feedback threshold Ta of the temperature T of the diagram of Figure 2.A.

An exactly identical situation occurs when considering the feedback thresholds of the temperature T (according to known methods) and the derivative T' of the temperature T (according to the method proposed by the invention) in the flame extinguishing step, respectively represented in the Figures 5.A and 5.B: the use of the values of the derivative T' allows the verification of the absence of the flame in a significantly shorter time, for the benefit of safety of the burner 1 in terms of reducing the risks of noisy denotations and dangerous for the integrity of the burner.

The above described control method may be schematised in the block diagrams of Figures 8 and 9, respectively relating to the ignition step of the burner and to the subsequent steady operating step.

As described above, also with the help of Figures 3 and 4, in the ignition step of the burner the method provides for the steps of:
**a1)** introducing said air and gas mixture into said burner body 4 and generating an electric discharge with an ignition device 5 for a first time interval Δt1;
b) measuring the temperature T in a point P of said combustion chamber 41;
c) calculating the derivative T' of the temperature T in a first time interval Δt1;
d) comparing said derivative T' to a first pre-set threshold value Tau1; and if in said first time interval Δt1 said derivative T' never exceeds said first pre-set threshold value Tau1, then:
   **e1)** establishing that said flame has not ignited, and further:
   **e11)** driving the stop to the ignition device 5,
   **e12)** closing the gas valve 7 to interrupt the gas flow into said burner body 4,
   **e13)** preferably keeping fan 2 running for some time for the air flow into said burner body (4) for the purposes of the post-ventilation step;
otherwise if in said first time interval Δt1 said derivative T' exceeds said first pre-set threshold value Tau1, then:
   **f1)** establishing that said flame ignited, and further:
   f11) driving the stop to the ignition device 5,
   f12) keeping the flow of said air and gas mixture into said burner body 4;
g) calculating the derivative T' of the temperature T in a second time interval Δt2 to compare it to a second pre-set threshold value Tau2, in which said second time interval Δt2 is greater than said first time interval Δt1 and said second threshold value Tau2 is lower in absolute value than said first threshold value Tau1,
and if in said second time interval Δt2 said derivative T' does not exceed said second threshold value Tau2, then:
   **h1)** establishing that said flame has not ignited, or it has extinguished, and further:
   h11) closing the gas valve 7 to interrupt the gas flow into said burner body 4,
   h12) keeping the fan 2 running for some time for the air flow into said burner body 4 for the purposes of the post-ventilation step;
otherwise if in said second time interval Δt2 said derivative T' exceeds said second threshold value Tau2, then:
   **i1)** confirming that said flame is ignited, and further:
   **i11)** keeping the flow of said air and gas mixture into said burner body 4 to switch to the steady operating step of said burner 1.

As regards the method in the steady operating step of the burner (described above also with the aid of the Figures 6 and 7), the block diagram in Figure 9 shows the following steps:
**a2)** keeping the flow of said air and gas mixture into said burner body 4 to keep the flame ignited;
b) measuring the temperature T in a point P of said combustion chamber 41;
c) calculating the derivative T' of the temperature T in a first time interval Δt3;
d) comparing said derivative T' to a first pre-set threshold value Tau3; and if in said first time interval Δt3 said derivative T' never exceeds said first pre-set threshold value Tau3, then:
   e2) establishing that said flame continues to be ignited, and further:
   e21) keeping the flow of said air and gas mixture into said burner body 4 for the steady operating step of said burner 1 to be continued;
otherwise if in said first time interval Δt3 said derivative T' exceeds said first pre-set threshold value Tau3, then:
   f2) establishing that said flame extinguished, and further:
   f21) keeping the flow of said air and gas mixture into said burner body 4 for a second time interval Δt4;
g) calculating the derivative T' of the temperature T in said second time interval Δt4 to compare it to a second pre-set threshold value Tau4, in which said second time interval Δt4, subsequent and immediately contiguous to said first time interval Δt3, is greater than said first time interval Δt3 and said second threshold value Tau4 is smaller in absolute value than said first threshold value Tau3;
and if in said second time interval Δt4 said derivative T' does not exceed said second threshold value Tau4, then:
   h2) confirming that said flame extinguished, and further:
   h21) closing the gas valve 7 to interrupt the gas flow into said burner body 4,
   **h22)** keeping the fan 2 running for some time for the air flow into said burner body 4 for the purposes of the post-ventilation step;
and if in said second time interval Δt4 said derivative T' exceeds said second threshold value Tau4, then:
   i2) establishing that said flame is ignited, and further:
   i21) keeping the flow of said air and gas mixture into said burner body 4 for the steady operating step of said burner 1 to be continued.

## Claims

1. Method for controlling the presence of the flame in the combustion chamber (41) of a premixed gas burner (1) fed by an air and gas mixture mainly and/or essentially comprising hydrogen H2,
said burner (1) comprising a burner body (4) inserted in said combustion chamber (41),
the presence of said flame being controlled by at least one temperature sensor (6) whose signal (ST), representative of the temperature T measured in a point (P) of said combustion chamber (41), is sent to a control device (8) that uses it to carry out at least the following steps during the ignition and steady operating steps of the said burner (1):
a1) in the ignition step, introducing said air and gas mixture into said burner body (4) and generating an electric discharge with an ignition device (5);
a2) in the steady operating step, keeping the flow of said air and gas mixture into said burner body (4) to keep the flame ignited;
b) measuring the temperature T in a point (P) of said combustion chamber (41);
c) calculating the derivative T' of the temperature T in a first time interval (Δt1; Δt3);
d) comparing said derivative T' to a first pre-set threshold value (Tau1; Tau3);
and if in said first time interval (Δt1; Δt3) said derivative T' never exceeds said first pre-set threshold value (Tau1; Tau3), then:
e1) in the ignition step, establishing that said flame has not ignited,
e2) in the steady operating step, establishing that said flame continues to be ignited;
otherwise if in said first time interval (Δt1; Δt3) said derivative T' exceeds said first pre-set threshold value (Tau1; Tau3), then:
f1) in the ignition step, establishing that said flame has ignited,
f2) in the steady operating step, establishing that said flame has extinguished;
g) calculating the derivative T' of the temperature T in a second time interval (Δt2; Δt4) to compare it to a second pre-set threshold value (Tau2; Tau4);
and if in said second time interval (Δt1; Δt4) said derivative T' does not exceed said second threshold value (Tau2; Tau4), then:
h1) during the ignition step, establishing that said flame has not ignited or extinguished,
h2) in the steady operating step, confirming that said flame has extinguished;
otherwise if in said second time interval (Δt2; Δt4) said derivative T' exceeds said second threshold value (Tau2; Tau4), then:
i1) in the ignition step, confirming that said flame is ignited,
i2) in the steady operating step, establishing that said flame is ignited.

2. Control method according to claim 1,
further comprising the following steps in the ignition step of said burner (1):
if in said first time interval (Δt1) said derivative T' never exceeds said first threshold value (Tau1), then following the step e1) the method comprises the further steps of:
e11) driving the stop to the ignition device (5),
e12) closing the gas valve (7) to interrupt the gas flow into said burner body (4);
otherwise if in said first time interval (Δt1) said derivative T' exceeds said first threshold value (Tau1), then following step f1) the method comprises the further steps of:
f11) driving the stop to the ignition device (5),
f12) keeping the flow of said air and gas mixture into said burner body (4);
and carrying out the step g), wherein said second time interval (Δt2) is greater than said first time interval (Δt1) and said second threshold value (Tau2) is lower in absolute value than said first threshold value (Tau1).

3. Method according to claim 2,
wherein, if in said first time interval (Δt1) said derivative T' exceeds said first threshold value (Tau2), then following the step i1) the method comprises the further step of:
i11) keeping the flow of said air and gas mixture into said burner body (4) in order to pass to the steady operating step of said burner (1);
otherwise following the step h1) the method comprises the further steps of:
h11) closing the gas valve (7) to interrupt the gas flow into said burner body (4),
h12) keeping the fan (2) running for some time for the air flow into said burner body (4) for the purpose of the post-ventilation step.

4. Method according to claim 2,
wherein following the step e1) the method comprises the further step of:
e13) keeping the fan (2) running for some time for the air flow into said burner body (4) for the purpose of the post-ventilation step.

5. Method according to any claims 2 to 4,
wherein said first time interval (Δt1) is lower than or equal to 2 seconds.

6. Method according to any claims 2 to 5,
wherein said second time interval (Δt2) is greater than said first time interval (Δt1) and is lower than or equal to 4 seconds.

7. Method according to any claims 2 to 6,
wherein said first threshold value (Tau1) is comprised between 20 °C/sec and 70 °C/sec and wherein said second threshold value (Tau2) is lower in absolute value than said first threshold value (Tau1) and is comprised between 5 °C/sec and 30 °C/sec.

8. Control method according to claim 1,
further comprising the following steps in the steady operating step of said burner (1):
if in said first time interval (Δt3) said derivative T' never exceeds said first threshold value (Tau3), then following the step e2) the method comprises the further steps of:
e21) keeping the flow of said air and gas mixture into said burner body (4) for the steady operating step of said burner (1) to be continued;
otherwise if in said first time interval (Δt3) said derivative T' exceeds said first threshold value (Tau3), then following the step f2) the method comprises the further step of:
f21) keeping the flow of said air and gas mixture into said burner body (4);
and carrying out the step g), wherein said second time interval (Δt4) is greater than said first time interval (Δt3) and said second threshold value (Tau4) is lower in absolute value than said first threshold value (Tau3).

9. Method according to claim 8,
wherein if in said second time interval (Δt4) said derivative T' exceeds said first threshold value (Tau4), then following the step i2) the method comprises the further step of:
i21) keeping the flow of said air and gas mixture into said burner body (4) for the steady operating step of said burner (1) to be continued;
otherwise following the step h2) the method comprises the further steps of:
h21) closing the gas valve (7) to interrupt the gas flow into said burner body (4),
h22) keeping the fan (2) running for some time for the air flow into said burner body (4) for the purpose of the post-ventilation step.

10. Method according to any claims 8 or 9,
wherein said first time interval (Δt3) is about 0.1 seconds.

11. Method according to any claims 8 to 10,
wherein said second time interval (Δt4) is greater than said first time interval (Δt3) and is lower than or equal to 4 seconds.

12. Method according to any claims 8 to 11,
wherein said first threshold value (Tau3) is comprised between 20 °C/sec and 70 °C/sec and wherein said second threshold value (Tau4) is lower in absolute value than said first threshold value (Tau3) and is comprised between 5 °C/sec and 30 °C/sec.

13. Control method according to any previous claim,
wherein said first (Tau1; Tau3) and second (Tau2; Tau4) threshold values are values pre-set and stored in said control device (8).

14. Premixed gas burner (1), fed mainly and/or essentially by hydrogen H2, comprising at least:
- a burner body (4) inserted in a combustion chamber (41) and in communication with an outflow duct (13) of an air and gas mixture,
- an ignition device (5) for igniting said air and gas mixture,
- at least one temperature sensor (6) adapted to measure the temperature values T in a point (P) of said combustion chamber (41),
- a combustion control and regulation device (8), adapted to receive an input signal (ST) from said at least one temperature sensor (6) and configured to implement the method according to the claims 1 to 13.

15. Burner (1) according to claim 14,
wherein said at least one temperature sensor (6) is a thermocouple or a thermistor.

## Patentansprüche

1. Verfahren zum Steuern des Vorhandenseins der Flamme in der Brennkammer (41) eines Gasvormischbrenners (1), der mit einem Luft-und Gasgemisch gespeist wird, das hauptsächlich und/oder im Wesentlichen Wasserstoff H2 umfasst,
wobei der Brenner (1) einen Brennerkörper (4) umfasst, der in die Brennkammer (41) eingesetzt ist,
wobei das Vorhandensein der Flamme durch mindestens einen Temperatursensor (6) gesteuert wird, dessen Signal (ST), das für die Temperatur T, die an einem Punkt (P) der Brennkammer (41) gemessen wird, repräsentativ ist, an eine Steuervorrichtung (8) gesendet wird, die es verwendet, um während der Schritte der Zündung und des ständigen Betriebs des Brenners (1) mindestens die folgenden Schritte auszuführen:
a1) im Schritt der Zündung Einleiten des Luft- und Gasgemisches in den Brennerkörper (4) und Erzeugen einer elektrischen Entladung mit einer Zündvorrichtung (5);
a2) im Schritt des ständigen Betriebs Aufrechterhalten des Stroms des Luft- und Gasgemisches in den Brennerkörper (4), um die Flamme gezündet zu halten;
b) Messen der Temperatur T an einem Punkt (P) der Brennkammer (41);
c) Berechnen der Ableitung T' der Temperatur T in einem ersten Zeitintervall (Δt1; Δt3);
d) Vergleichen der Ableitung T' mit einem ersten voreingestellten Schwellenwert (Tau1; Tau3);
und wenn in dem ersten Zeitintervall (Δt1; Δt3) die Ableitung T' nie den ersten voreingestellten Schwellenwert (Taul; Tau3) überschreitet, dann:
e1) im Schritt der Zündung Feststellen, dass die Flamme nicht gezündet hat,
e2) im Schritt des ständigen Betriebs Feststellen, dass die Flamme weiterhin gezündet ist;
anderenfalls, wenn in dem ersten Zeitintervall (Δt1; Δt3) die Ableitung T' den ersten voreingestellten Schwellenwert (Tau1; Tau3) überschreitet, dann:
f1) im Schritt der Zündung Feststellen, dass die Flamme gezündet hat,
f2) im Schritt des ständigen Betriebs Feststellen, dass die Flamme erloschen ist;
g) Berechnen der Ableitung T' der Temperatur T in einem zweiten Zeitintervall (Δt2; Δt4), um sie mit einem zweiten voreingestellten Schwellenwert (Tau2; Tau4) zu vergleichen;
und wenn in dem zweiten Zeitintervall (Δt1; Δt4) die Ableitung T' den zweiten Schwellenwert (Tau2; Tau4) nicht überschreitet, dann:
h1) während des Schrittes der Zündung Feststellen, dass die Flamme nicht gezündet hat oder erloschen ist,
h2) im Schritt des ständigen Betriebs Bestätigten, dass die Flamme erloschen ist;
andernfalls, wenn in dem zweiten Zeitintervall (Δt2; Δt4) die Ableitung T' den zweiten Schwellenwert (Tau2; Tau4) überschreitet, dann:
i1) im Schritt der Zündung Bestätigten, dass die Flamme gezündet ist,
i2) im Schritt des ständigen Betriebs Feststellen, dass die Flamme gezündet ist.

2. Steuerungsverfahren nach Anspruch 1,
ferner umfassend die folgenden Schritte im Schritt der Zündung des Brenners (1):
wenn in dem ersten Zeitintervall (Δt1) die Ableitung T' nie den ersten Schwellenwert (Tau1) überschreitet, dann umfasst das Verfahren nach dem Schritt e1) die weiteren Schritte:
e11) Antreiben des Anschlags zur Zündvorrichtung (5),
e12) Schließen des Gasventils (7), um den Gasstrom in den Brennerkörper (4) zu unterbrechen;
anderenfalls, wenn in dem ersten Zeitintervall (Δt1) die Ableitung T' den ersten Schwellenwert (Tau1) überschreitet, dann umfasst das Verfahren nach dem Schritt f1) die weiteren Schritte:
f11) Antreiben des Anschlags zur Zündvorrichtung (5),
f12) Aufrechterhalten des Stroms des Luft- und Gasgemischs in den Brennerkörper (4);
und Ausführen des Schritts g), wobei das zweite Zeitintervall (Δt2) größer ist als das erste Zeitintervall (Δt1) und der zweite Schwellenwert (Tau2) im Absolutwert niedriger ist als der erste Schwellenwert (Tau1).

3. Verfahren nach Anspruch 2,
wobei, wenn in dem ersten Zeitintervall (Δt1) die Ableitung T' den ersten Schwellenwert (Tau2) überschreitet, das Verfahren dann nach dem Schritt i1) den weiteren Schritt umfasst:
i11) Aufrechterhalten des Stroms des Luft- und Gasgemischs in den Brennerkörper (4), um zu dem Schritt des ständigen Betriebs des Brenners (1) überzugehen;
anderenfalls umfasst das Verfahren nach dem Schritt h1) die weiteren Schritte:
h11) Schließen des Gasventils (7), um den Gasstrom in den Brennerkörper (4) zu unterbrechen;
h12) Laufenlassen des Ventilators (2) für einige Zeit, damit die Luft zum Zwecke des Nachbelüftungsschritts in den Brennerkörper (4) strömt.

4. Verfahren nach Anspruch 2,
wobei das Verfahren nach dem Schritt e1) den weiteren Schritt umfasst:
e13) Laufenlassen des Ventilators (2) für einige Zeit, damit die Luft zum Zwecke des Nachbelüftungsschritts in den Brennerkörper (4) strömt.

5. Verfahren nach einem der Ansprüche 2 bis 4,
wobei das erste Zeitintervall (Δt1) kleiner oder gleich 2 Sekunden ist.

6. Verfahren nach einem der Ansprüche 2 bis 5,
wobei das zweite Zeitintervall (Δt2) größer als das erste Zeitintervall (Δt1) ist und kleiner oder gleich 4 Sekunden ist.

7. Verfahren nach einem der Ansprüche 2 bis 6,
wobei der erste Schwellenwert (Tau1) zwischen 20 °C/s und 70 °C/s liegt und wobei der zweite Schwellenwert (Tau2) im Absolutwert niedriger ist als der erste Schwellenwert (Tau1) und zwischen 5 °C/s und 30 °C/s liegt.

8. Steuerungsverfahren nach Anspruch 1,
ferner umfassend die folgenden Schritte im Schritt des ständigen Betriebs des Brenners (1):
wenn in dem ersten Zeitintervall (Δt3) die Ableitung T' nie den ersten Schwellenwert (Tau3) überschreitet, dann umfasst das Verfahren nach dem Schritt e2) die weiteren Schritte:
e21) Aufrechterhalten des Stroms des Luft- und Gasgemischs in den Brennerkörper (4), damit der Schritt des ständigen Betriebs des Brenners (1) fortgesetzt wird;
anderenfalls, wenn in dem ersten Zeitintervall (Δt3) die Ableitung T' den ersten Schwellenwert (Tau3) überschreitet, umfasst dann das Verfahren nach dem Schritt f2) den weiteren Schritt:
f21) Aufrechterhalten des Stroms des Luft- und Gasgemischs in den Brennerkörper (4);
und Ausführen des Schritts g), wobei das zweite Zeitintervall (Δt4) größer ist als das erste Zeitintervall (Δt3) und der zweite Schwellenwert (Tau4) im Absolutwert niedriger ist als der erste Schwellenwert (Tau3).

9. Verfahren nach Anspruch 8,
wobei, wenn in dem zweiten Zeitintervall (Δt4) die Ableitung T' den ersten Schwellenwert (Tau4) überschreitet, dann das Verfahren nach dem Schritt i2) den weiteren Schritt umfasst:
i21) Aufrechterhalten des Stroms des Luft- und Gasgemischs in den Brennerkörper (4), damit der Schritt des ständigen Betriebs des Brenners (1) fortgesetzt wird;
anderenfalls umfasst das Verfahren nach dem Schritt h2) die weiteren Schritte:
h21) Schließen des Gasventils (7), um den Gasstrom in den Brennerkörper (4) zu unterbrechen;
h22) Laufenlassen des Ventilators (2) für einige Zeit, damit die Luft zum Zwecke des Nachbelüftungsschritts in den Brennerkörper (4) strömt.

10. Verfahren nach einem der Ansprüche 8 oder 9,
wobei das erste Zeitintervall (Δt3) etwa 0,1 Sekunden beträgt.

11. Verfahren nach einem der Ansprüche 8 bis 10,
wobei das zweite Zeitintervall (Δt4) größer ist als das erste Zeitintervall (Δt3) und kleiner oder gleich 4 Sekunden ist.

12. Verfahren nach einem der Ansprüche 8 bis 11,
wobei der erste Schwellenwert (Tau3) zwischen 20 °C/s und 70 °C/s liegt und wobei der zweite Schwellenwert (Tau4) im Absolutwert niedriger ist als der erste Schwellenwert (Tau3) und zwischen 5 °C/s und 30 °C/s liegt.

13. Steuerungsverfahren nach einem der vorherigen Ansprüche,
wobei der erste (Tau1; Tau3) und der zweite (Tau2; Tau4) Schwellenwert voreingestellte Werte sind und in der Steuervorrichtung (8) gespeichert sind.

14. Gasvormischbrenner (1), der hauptsächlich und/oder im Wesentlichen mit Wasserstoff H2 gespeist wird, mindestens umfassend:
- einen Brennerkörper (4), der in eine Brennkammer (41) eingesetzt ist und mit einem Ausströmkanal (13) eines Luft- und Gasgemisches in Verbindung steht,
- eine Zündvorrichtung (5) zur Zündung des Luft- und Gasgemisches,
- mindestens einen Temperatursensor (6), der geeignet ist, die Temperaturwerte T an einem Punkt (P) der Brennkammer (41) zu messen,
- eine Steuer- und Regelvorrichtung der Verbrennung (8), die geeignet ist, ein Eingangssignal (ST) von dem mindestens einen Temperatursensor (6) zu empfangen, und die konfiguriert ist, das Verfahren nach den Ansprüchen 1 bis 13 umzusetzen.

15. Brenner (1) nach Anspruch 14,
wobei der mindestens eine Temperatursensor (6) ein Thermoelement oder ein Thermistor ist.

## Revendications

1. Procédé de contrôle de la présence de la flamme dans la chambre de combustion (41) d'un brûleur à gaz prémélangé (1) alimenté par un mélange d'air et de gaz comprenant principalement et/ou essentiellement de l'hydrogène H2,
ledit brûleur (1) comprend un corps de brûleur (4) inséré dans ladite chambre de combustion (41),
la présence de ladite flamme étant contrôlée par au moins un capteur de température (6) dont le signal (ST), représentatif de la température T mesurée en un point (P) de ladite chambre de combustion (41), est envoyé à un dispositif de commande (8) qui l'utilise pour effectuer au moins les étapes suivantes lors des phases d'allumage et de fonctionnement régulier dudit brûleur (1):
a1) dans l'étape d'allumage, introduire ledit mélange d'air et de gaz dans ledit corps de brûleur (4) et générer une décharge électrique à l'aide d'un dispositif d'allumage (5);
a2) dans l'étape de fonctionnement continu, maintenir le flux de ce mélange d'air et de gaz dans le corps du brûleur (4) pour maintenir la flamme allumée;
b) mesurer la température T en un point (P) de ladite chambre de combustion (41);
c) calculer la dérivée T' de la température T dans un premier intervalle de temps (Δt1 ; Δt3);
d) comparer ladite dérivée T' à une première valeur seuil prédéfinie (Tau1 ; Tau3);
et si, dans ledit premier intervalle de temps (Δt1 ; Δt3), ladite dérivée T' ne dépasse jamais ladite première valeur seuil prédéfinie (Tau1 ; Tau3), alors:
e1) lors de l'étape d'allumage, établir que ladite flamme ne s'est pas allumée,
e2) dans l'étape de fonctionnement continu, établir que ladite flamme continue d'être allumée;
sinon, si dans ledit premier intervalle de temps (Δt1 ; Δt3), ladite dérivée T' dépasse ladite première valeur seuil prédéfinie (Tau1 ; Tau3), alors:
f1) lors de l'étape d'allumage, établir que ladite flamme s'est allumée,
f2) dans l'étape de fonctionnement continu, établir que ladite flamme s'est éteinte;
g) calculer la dérivée T' de la température T dans un deuxième intervalle de temps (Δt2 ; Δt4) pour la comparer à une deuxième valeur seuil prédéfinie (Tau2 ; Tau4);
et si, dans ledit deuxième intervalle de temps (Δt1 ; Δt4), ladite dérivée T' ne dépasse pas ladite deuxième valeur seuil (Tau2 ; Tau4), alors:
h1) pendant l'étape d'allumage, établir que ladite flamme ne s'est pas allumée ou s'est éteinte,
h2) au cours de la phase de fonctionnement continu, confirmer que ladite flamme s'est éteinte;
sinon, si dans ledit deuxième intervalle de temps (Δt2 ; Δt4), ladite dérivée T' dépasse ladite deuxième valeur seuil (Tau2 ; Tau4), alors:
i1) lors de l'étape d'allumage, confirmer que ladite flamme est allumée,
i2) dans l'étape de fonctionnement continu, établir que ladite flamme est allumée.

2. Méthode de contrôle selon la revendication 1,
comprenant en outre les étapes suivantes dans l'étape d'allumage dudit brûleur (1):
si, dans ledit premier intervalle de temps (Δt1), ladite dérivée T' ne dépasse jamais ladite première valeur seuil (Tau1), alors, après l'étape e1), la méthode comprend les étapes suivantes:
e11) conduire la butée jusqu'au dispositif d'allumage (5),
e12) fermer la vanne de gaz (7) pour interrompre le flux de gaz dans ledit corps de brûleur (4);
sinon, si dans ledit premier intervalle de temps (Δt1), ladite dérivée T' dépasse ladite première valeur seuil (Tau1), alors, après l'étape f1), la méthode comprend les étapes suivantes:
f11) conduire la butée jusqu'au dispositif d'allumage (5),
f12) maintenir le flux de ce mélange d'air et de gaz dans le corps du brûleur (4);
et en effectuant l'étape g), dans laquelle ledit deuxième intervalle de temps (Δt2) est supérieur audit premier intervalle de temps (Δt1) et ladite deuxième valeur seuil (Tau2) est inférieure en valeur absolue à ladite première valeur seuil (Tau1).

3. Méthode selon la revendication 2,
dans laquelle, si dans ledit premier intervalle de temps (Δt1), ladite dérivée T' dépasse ladite première valeur seuil (Tau2), après l'étape i1), la méthode comprend l'étape supplémentaire suivante:
i11) maintenir le flux dudit mélange d'air et de gaz dans ledit corps de brûleur (4) afin de passer à l'étape de fonctionnement stable dudit brûleur (1);
sinon, après l'étape h1), la méthode comprend les étapes suivantes:
h11) fermer la vanne de gaz (7) pour interrompre le flux de gaz dans ledit corps de brûleur (4),
h12) maintenir le ventilateur (2) en marche pendant un certain temps pour l'écoulement de l'air dans ledit corps de brûleur (4) aux fins de l'étape de post-ventilation.

4. Méthode selon la revendication 2,
dans laquelle, après l'étape e1), la méthode comprend l'étape supplémentaire suivante:
e13) maintenir le ventilateur (2) en marche pendant un certain temps pour l'écoulement de l'air dans ledit corps de brûleur (4) aux fins de l'étape de post-ventilation.

5. Méthode selon l'une des revendications 2 à 4,
dans laquelle le premier intervalle de temps (Δt1) est inférieur ou égal à 2 secondes.

6. Méthode selon l'une des revendications 2 à 5,
dans laquelle ledit deuxième intervalle de temps (Δt2) est supérieur audit premier intervalle de temps (Δt1) et est inférieur ou égal à 4 secondes.

7. Méthode selon l'une des revendications 2 à 6,
dans laquelle la première valeur seuil (Tau1) est comprise entre 20°C/sec et 70°C/sec et dans laquelle la deuxième valeur seuil (Tau2) est inférieure en valeur absolue à la première valeur seuil (Tau1) et est comprise entre 5°C/sec et 30°C/sec.

8. Méthode de contrôle selon la revendication 1,
comprenant en outre les étapes suivantes dans l'étape de fonctionnement régulier dudit brûleur (1):
si, dans ledit premier intervalle de temps (Δt3), ladite dérivée T' ne dépasse jamais ladite première valeur seuil (Tau3), alors, après l'étape e2), la méthode comprend les étapes suivantes:
e21) maintenir le flux dudit mélange d'air et de gaz dans ledit corps de brûleur (4) pour que l'étape de fonctionnement régulier dudit brûleur (1) se poursuive;
sinon, si dans ledit premier intervalle de temps (Δt3), ladite dérivée T' dépasse ladite première valeur seuil (Tau3), alors, après l'étape f2), la méthode comprend l'étape supplémentaire suivante:
f21) maintenir le flux de ce mélange d'air et de gaz dans le corps du brûleur (4);
et réalisation de l'étape g), dans laquelle ledit deuxième intervalle de temps (Δt4) est supérieur audit premier intervalle de temps (Δt3) et ladite deuxième valeur seuil (Tau4) est inférieure en valeur absolue à ladite première valeur seuil (Tau3).

9. Méthode selon la revendication 8,
dans laquelle si, dans ledit deuxième intervalle de temps (Δt4), ladite dérivée T' dépasse ladite première valeur seuil (Tau4), après l'étape i2), la méthode comprend l'étape supplémentaire suivante:
i21) maintenir le flux dudit mélange d'air et de gaz dans ledit corps de brûleur (4) pour que l'étape de fonctionnement régulier dudit brûleur (1) se poursuive;
sinon, après l'étape h2), la méthode comprend les étapes suivantes :
h21) fermer la vanne de gaz (7) pour interrompre le flux de gaz dans ledit corps de brûleur (4),
h22) maintenir le ventilateur (2) en marche pendant un certain temps pour l'écoulement de l'air dans ledit corps de brûleur (4) aux fins de l'étape de post-ventilation.

10. Méthode selon les revendications 8 ou 9,
dans laquelle le premier intervalle de temps (Δt3) est d'environ 0,1 seconde.

11. Méthode selon l'une des revendications 8 à 10,
dans laquelle ledit deuxième intervalle de temps (Δt4) est supérieur audit premier intervalle de temps (Δt3) et est inférieur ou égal à 4 secondes.

12. Méthode selon l'une des revendications 8 à 11,
dans laquelle la première valeur seuil (Tau3) est comprise entre 20°C/sec et 70°C/sec et dans laquelle la deuxième valeur seuil (Tau4) est inférieure en valeur absolue à la première valeur seuil (Tau3) et est comprise entre 5°C/sec et 30°C/sec.

13. Méthode de contrôle selon toute revendication précédente,
dans laquelle les premières (Tau1 ; Tau3) et deuxièmes (Tau2 ; Tau4) valeurs seuils sont des valeurs prédéfinies et stockées dans ledit dispositif de commande (8).

14. Brûleur à gaz prémélangé (1), alimenté principalement et/ou essentiellement par de l'hydrogène H2, comprenant au moins:
- un corps de brûleur (4) inséré dans une chambre de combustion (41) et en communication avec un conduit de sortie (13) d'un mélange d'air et de gaz,
- un dispositif d'allumage (5) pour allumer ledit mélange d'air et de gaz,
- au moins un capteur de température (6) adapté pour mesurer les valeurs de température T en un point (P) de ladite chambre de combustion (41),
- un dispositif de commande et de régulation de la combustion (8), adapté pour recevoir un signal d'entrée (ST) dudit au moins un capteur de température (6) et configuré pour mettre en œuvre le procédé selon les revendications 1 à 13.

15. Brûleur (1) selon la revendication 14,
dans laquelle ledit au moins un capteur de température (6) est un thermocouple ou une thermistance.
